# EUROPÄISCHE PATENTANMELDUNG

(11) **EP 1 275 691 A1**
(43) Veröffentlichungstag der Anmeldung: **15.01.2003**
(21) Anmeldenummer: 02013753.5
(22) Anmeldetag: 21.06.2002
(51) Int. Cl.: C08K 9/04, C08L 25/06

(54) **Thermoplastgemisch aus syndiotaktischem Polystyrol und Organophil-modifizierte, anorganische Füllstoffe**

(30) Priorität: 13.07.2001 DE 10134142
(71) Anmelder: REHAU AG + Co, 95111 Rehau (DE)
(72) Erfinder: Steffl, Udo, Dr., c/oREHAU AG + Co., 95111 Rehau (DE)

(57) **Zusammenfassung**

Die Erfindung betrifft ein Thermoplastgemisch, das besteht
(A) zu 100 Gewichtsteilen aus styrolischen Polymeren mit überwiegender syndiotaktischer Konfiguration
(B) zu 1 - 70 Gewichtsteilen aus anorganischen Schichtsilikaten als Füllstoff, die durch lonenaustausch organofil gemacht wurden
C) zu 0,1- 50 Gewichtsteilen aus einem Polystyrol-Polymeren

Das Thermoplastgemisch ist besonders geeignet für Anwendungen bei erhöhter Dauergebrauchstemperatur und kann daher bevorzugt eingesetzt werden zur Herstellung von Halbzeugen oder Formteilen für die Bereiche Automobilindustrie, Medizintechnik, Hausgeräteindustrie, Büroartikelindustrie und Elektronikindustrie.

## Beschreibung

Die vorliegende Erfindung betrifft ein durch lonenaustausch organophil modifizierte, anorganische Füllstoffe enthaltendes Thermoplastgemisch, das aus mindestens drei Komponenten zusammengesetzt ist und zur Herstellung von Formteilen oder Halbzeugen, insbesondere für den Einsatz bei erhöhter Dauergebrauchstemperatur geeignet ist.

Durch lonenaustausch mit organischen lonen organophil modifizierte, anorganische Schichtverbindungen, insbesondere 2- und 3-Schichtsilikate der Phyllosilikate, wie z.B. der Smektit, Tonerden sind bereits seit mehreren Jahrzehnten dem Fachmann bekannt.
So wurde das Grundprinzip der organophilen Modifizierung von Natrium-Montmorilloniten und Natrium-Hektoriten durch lonenaustausch mit Alkylammoniumionen, die bevorzugt mindestens einen Alkylsubstituenten mit mehr als sechs Methylengruppen enthalten, bereits von U. Hofmann (Angew. Chem. 1956, 68:53 ff) und A. Weiss (Angew. Chem. 1963, 75: 113 ff) vorgestellt. Durch den lonenaustausch wird eine Aufweitung des Schichtabstandes erzielt, die sich durch Röntgenbeugung und Transmissionselektronenmikroskopie nachweisen lässt.

Wie im Review von M. Alexandre (Materials Science and Eng. 2000, 28:1ff) beschrieben, sind thermoplastische Nanocomposite mit Polyamid, Polypropylen oder Poly(ethen-covinylacetat) als Matrix bekannt.

A. Moet (Nanostruct. Mater. 1994, 4: 965ff) beschreibt eine insitu Lösungspolymerisation von Styrol in Gegenwart von organophilem Montmorillonit, wobei die wachsenden Polystyrolketten auf das Silikat aufgepfropft werden. Aufgrund der amorphen Struktur des ataktischen Polystyrols und damit des fehlenden Schmelzpunktes ist eine Anwendung der Polystyrol-Nanocomposite bei erhöhter Temperatur nicht möglich.

Kommerziell am Markt erhältlich sind glasfaserverstärkte syndiotaktische Polystyrole. Diese weisen ein gutes Eigenschaftsprofil bezüglich Zug-Ebene-Modul und Zugfestigkeit auf. Die Zugabe von Glasfasern führt jedoch zu einem drastischen Abfall der Schlagzähigkeit.

Auch wirken sich die Glasfasern in Folge der Faserabzeichnungen im Formteil negativ im optischen Erscheinungsbild aus.

Aufgabe der vorliegenden Erfindung ist daher, ein Thermoplastgemisch zur Verfügung zu stellen, dessen Füllstoffzusatz sowohl E-Modul, als auch Schlagzähigkeit der Zusammensetzung günstig beeinflusst, weiterhin eine optisch ansprechende, glatte Oberflächenstruktur ausbildet und insbesondere für den Einsatz bei erhöhter Dauergebrauchstemperatur geeignet ist.

Diese Aufgabe wird erfindungsgemäß gelöst durch ein durch lonenaustausch organophil modifiziertes, anorganische Füllstoffe enthaltendes Thermoplastgemisch, umfassend
(A) 100 Gewichtsteile eines styrolhaltigen Polymeren mit überwiegend syndiotaktischer Konfiguration
(B) 1 - 70 Gewichtsteile eines oder mehrerer anorganischer Füllstoffe, wobei diese Füllstoffe ganz oder teilweise aus durch lonenaustausch mit organischen lonen modifizierten anorganischen Schichtverbindungen mit ionischen Schichtladungen bestehen, deren Längen-/ Durchmesser-Verhältnis > 1 und deren Schichtabstände > 1,2 nm sind.
(C) 0,1 - 50 Gewichtsteile eines Polystyrolcopolymeren.

Das styrolhaltige Polymere mit überwiegend syndiotaktischer Konfiguration (A) kann ein syndiotaktisches Polystyrol-Homo- oder Copolymeres sein mit 80 - 100 % syndiotaktischen Diaden und einem gewichtsmittleren Molekulargewicht von 10.000 - 1.000.000.

Bevorzugte Komponenten (B) sind mit organischen Kationen austauschfähige 2- und 3-Schicht-Silikate, insbesondere der Tonerden Montmorillonit, Hektorit, Vermikulit. die entsprechend der ionischen Schichtladung durch lonenaustausch mit organischen Kationen modifiziert sind. Organische Kationen gemäß vorstehender Beschreibung sind protonierte Primäre, sekundäre und tertiäre Amine, quarternäre Ammoniumverbindungen, protonierte basische Heterocyclen wie z. B. Imidazole mit variablen Substituenten, Amidine, Harnstoffe, Iminoether, die bevorzugt mindestens eine Alkylgruppe mit mehr als 6 C-Atomen enthalten. Bevorzugt sind Organophilierung mit Stearylamin, Aminododecansäure, 2-hydroxyalkylsubstituierte Imidazole.
Organische Kationen können weiterhin Metallsalze von aromatischen, aliphatischen, araliphatischen und cycloaliphatischen Carbonsäuren, Sulfonsäuren oder Phosphorsäuren sein, die bevorzugt mindestens eine Alkylgruppe mit mehr als 6 C-Atomen enthalten.

Die Komponente (B) kann zusätzlich vor oder während des lonenaustausches mit Polycarbonsäuren, Polyphosphorsäuren, wasserlöslichen Polymeren, z. B. Polyvinylalkohol, Polyethylenoxid, Vinylpyrrolidonhomo- und -copolymeren, Stärke, Dextrine, Dextrin- und Zuckerderivaten, Aminozuckern sowie mit ionischen und nicht-ionischen Tensiden, z.B. ethoxyliertes Nonylphenol, ethoxylierte Fettalkohole, modifiziert werden.

Vertreter der anionischen austauschfähigen 2-Schicht-Silikate sind Hydrotalcite, die durch lonenaustausch mit anorganischen Anionen organophil gemacht werden.

Teile der erfindungsgemäßen Komponenten (B) können aus Mischungen aus einer oder mehreren anorganischen Schichtverbindungen ohne Schichtladung mit einer oder mehreren, durch lonenaustausch organophil modifizierten ionischen Schichtverbindungen bestehen. Besonders bevorzugt sind Mischungen aus Talk und durch Kationenaustausch organophil modifizierten Schichtsilikaten, wobei der Gehalt an organophilem Schichtsilikat, bezogen auf den Gesamtsilikatgehalt, 0,1- 15 Gewichtsanteile beträgt.

Besonders bevorzugt sind auch Gemische, in denen der ionische Modifikator der ionenaustauschfähigen, anorganischen Schichtverbindungen von Komponente (B) ein protoniertes, sekundäres oder tertiäres Amin, eine protonierte basische Heteroatomverbindung oder einer quarternäre Ammoniumverbindung ist, die über mindestens einen Substituenten, mit mindestens einer Alkyl- oder funktionalisierten Alkylgruppe mit mehr als 6 Methylengruppen verfügt.

Der Gewichtsanteil der Komponente (B) am Gemisch aus (A), (B) und (C) kann zwischen 71 Teilen betragen, ganz besonders bevorzugt sind 1 - 30 Gewichtsanteile.

Das Polystyrolcopolymere (C) kann ein Poly(styrol-co-acrylnitril)-; Poly(styrol-co-methylvinyloxazolin)-; Poly(styrol-co-maleinsäureanhydrid)-; Poly(styrol-co-methylvinyloxazolin-coacrylnitril)- oder Poly(styrol-co-maleinsäureimid)-copolymeres sein.
Weiterhin kann das Polystyrolcopolymere (C) ein Gemisch aus zwei oder mehreren der vorstehend genannten Polymere sein. Der Gewichtsanteil der Komponente (C) am Gemisch aus (A), (B) und (C) kann zwischen 1 und 50 Teilen betragen.

Besonders bevorzugt sind Poly(styrol-co-maleinsäureimid)-copolymere, bei denen die Maleinsäureanhydridgruppen nur teilweise imidisiert sind und ein gewichtsmittleres Molekulargewicht zwischen 80.000 und 200.000 aufweisen. Der Gehalt an unreagierten Maleinsäureanhydridgruppen bei den Poly(styrol-co-maleinsäureimid)-copolymeren kann zwischen 0,1 und 10mol% und der Gehalt an Maleinimidgruppen zwischen 0,1 und 50mol% betragen.

Ohne Zusatz der Komponente (C) im erfindungsgemäßen Thermoplastgemisch sind die durch lonenaustausch organophil modifizierten, anorganischen 2- oder 3-Schicht-Silikate nur schwer zu dispergieren. Durch die Verwendung der Polystyrolcopolymeren (C) wird die Intercalierung und Exfolierung der anorganischen 2- oder 3-Schicht-Silikate wesentlich erleichtert bzw. erst ermöglicht.

Das erfindungsgemäße Thermoplastgemisch kann bis zu 200 Gewichtsanteilen Zusätze umfassen, in Form von bis zu 5 Gewichtsanteilen Gleit- oder Verarbeitungshilfsmittel, bis zu 5 Gewichtsanteilen Pigmente, bis zu 2 Gewichtsanteilen Nukleierungsmittel, bis zu 1 Gewichtsanteil Stabilisatoren, bis zu 2 Gewichtsanteilen Treibmittel, bis zu 2 Gewichtsanteilen Antistatika, bis zu 100 Gewichtsanteilen Prozessöle, bis zu 100 Gewichtsanteilen Flammschutzmittel und bis zu 100 Gewichtsanteilen Kautschuk.

Das erfindungsgemäße Thermoplastgemisch kann in bekannter Weise durch Mischen und Erwärmen der einzelnen Komponenten, vorzugsweise unter Einwirkung von Scherkräften, in einem Aufbereitungsaggregat hergestellt werden. Es lässt sich mittels Extrusions- oder Spritzgussverfahren zur Herstellung von Formteilen oder Halbzeugen verwenden.

Da die aus den erfindungsgemäßen Thermoplastgemischen hergestellten Halbzeuge und Formteile keinen Abfall der Schlagzähigkeit aufweisen, und da sie für eine Anwendung bei erhöhter Dauergebrauchstemperatur besonders geeignet sind, wird ihr Einsatz bevorzugt in den Bereichen Automobilindustrie, Medizintechnik, Hausgeräteindustrie, Büroartikel- und Elektronikindustrie erfolgen.
Weiterhin weisen die erfindungsgemäßen, anorganische Füllstoffe enthaltenden Thermoplastgemische einen exzellenten Oberflächenausfall ohne Faserabzeichnungen auf.

In den folgenden Beispielen wird die vorliegende Erfindung verdeutlicht. Die Zusammensetzungen sind in Gewichtsteilen (T) der einzelnen Komponenten angegeben und betragen in den folgenden Beispielen:

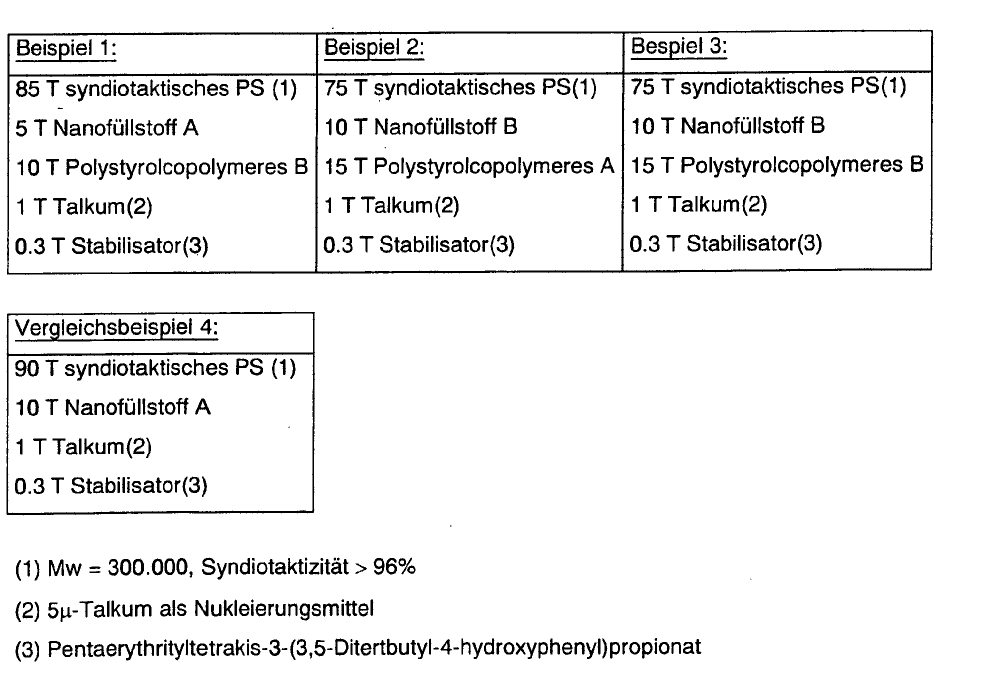

Polystyrolcopolymeres A: Poly(styrol-co-methylvinyloxazolin), MFI [g/10min] = 9.2; Gehalt an Oxazolingruppen 0.25 mmol/g
Polystyrolcopolymeres B: Poly(styrol-co-maleinsäureimid), Mw = 140.000, Gehalt an Maleinimidgruppen 39 mol%
Nanofüllstoff B: mit linearer C₁₈-Alkylgruppe modifiziertes Schichtsilkat, mittlere Partikelgröße 3,5 µm, Glühverlust ca 25%
Nanofüllstoff A: mit linearer C₁₈-Alkylgruppe und Benzylgruppe modifiziertes Schichtsilkat, mittlere Partikelgröße 3,6 µm, Glühverlust ca 38%

### Beispiel 1:

In einem Doppelschneckenextruder mit Dosiereinrichtung für Granulate werden bei Temperaturen > 270° granulatförmiges syndiotaktisches Polystyrol und Polystyrolcopolymeres B dosiert. Die Mischung wird aufgeschmolzen und in den Extruder über eine Pulverwaage die entsprechende Menge Nanofüllstoff A dosiert. Das resultierende, füllstoffhaltige Thermoplastgemisch hat die in der Tabelle angegebenen Eigenschaften.

### Beispiel 2:

In einem Doppelschneckenextruder mit Dosiereinrichtung für Granulate werden bei Temperaturen > 270° granulatförmiges, syndiotaktisches Polystyrol und Polystyrolcopolymeres A dosiert. Die Mischung wird aufgeschmolzen und in den Extruder über eine Pulverwaage die entsprechende Menge Nanofüllstoff B dosiert. Das resultierende füllstoffhaltige Thermoplastgemisch hat die in der Tabelle angegebenen Eigenschaften.

### Beispiel 3:

In einem Doppelschneckenextruder mit Dosiereinrichtung für Granulate werden bei Temperaturen > 270° granulatförmiges syndiotaktisches Polystyrol und Polystyrolcopolmeres A dosiert. Die Mischung wird aufgeschmolzen und in den Extruder über eine Pulverwaage die entsprechende Menge Nanofüllstoff B dosiert. Das resultierende füllstoffhaltige Thermoplastgemisch hat die in der Tabelle angegebenen Eigenschaften.

### Vergleichsbeispiel :

In einem Doppelschneckenextruder mit Dosiereinrichtung für Granulate wird bei Temperaturen > 270° granulatförmiges, syndiotaktisches Polystyrol in den Extruder dosiert. Die Mischung wird aufgeschmolzen und in den Extruder über eine Pulverwaage die entsprechende Menge Nanofüllstoff A dosiert. Das resultierende füllstoffhaltige Thermoplastgemisch hat die in der Tabelle angegebenen Eigenschaften.

### Mechanische Eigenschaften der erfindungsgemäßen Thermoplastmischungen

| Eigenschaft | Beispiel 1 | Beispiel 2 | Beispiel 3 | Vergleichs-Beispiel 4 |
|---|---|---|---|---|
| Reißfestigkeit | 38.7 | 42.9 | 45.3 | 39.6 |
| Reißdehnung | 8.4 | 5.7 | 6.8 | 3.1 |
| Zugfestigkeit | 37.4 | 45.4 | 49.3 | 35.0 |
| Zug-E-Modul | 4120 | 4870 | 5100 | 3450 |
| Schlagzähigkeit | 10.2 | 8.5 | 7.4 | 4.2 |

Reißfestigkeit nach DIN 53504 [N/mm²]; Reißdehnung nach DIN 53504 [%]; Zugfestigkeit nach ISO 527 [MPa]; Zug-E-Modul nach ISO 527 [MPa] und Schlagzähigkeit nach ISO 180 bei RT [kJ/m²].

Anlage 1: WAXS-Messung des Nanofüllstoffes B im Vergleich zum Thermoplastgemisch Beispiel 2 und Thermoplastgemisch Beispiel 3.

Die beispielgemäßen, durch lonenaustausch organophil modifizierte, anorganische Füllstoffe enthaltende Thermoplastgemische sind hervorragend zum Herstellen von Halbzeugen und Formteilen geeignet.

## Patentansprüche

1. Durch lonenaustausch organophil modifizierte, anorganische Füllstoffe enthaitendes Thermoplastgemisch, welches mindestens aus drei Komponenten besteht, wobei die Zusammensetzung umfasst:
(A) 100 Gewichtsteile eines styrolhaltigen Polymeren mit überwiegend syndiotaktischer Konfiguration
(B) 1 - 70 Gewichtsteile eines oder mehrerer anorganischer Füllstoffe, wobei diese Füllstoffe ganz oder teilweise durch lonenaustausch mit organischen lonen modifizierte, anorganische silikatische Schichtverbindungen mit ionischen Schichtladungen sind, die über ein Längen-/Durchmesser-Verhältnis > 1 verfügen und deren Schichtabstände > 1,2 nm sind.
(C) 0,1 - 50 Gewichtsteile eines Polystyrolcopolymeren

2. Zusammensetzung nach Anspruch 1, wobei Komponente (A) ein syndiotaktisches Polystyrol-Homo- oder Copolymeres mit 80- 100 % syndiotaktischen Diaden und einem gewichtsmittleren Molekulargewicht von 10.000 - 1.000.000 ist.

3. Zusammensetzung nach Anspruch 1, wobei die Füllstoffe der Komponente (B) aus einem oder mehreren 2- und 3-Schicht-Silikaten bestehen, die entsprechend ihrer ionischen Schichtladung durch lonenaustausch mit Ammoniumkomponente oder Carboxylatkomponente organophil modifiziert sind.

4. Zusammensetzung nach einem der Ansprüche 1 und 3, wobei die anorganischen Schichtverbindungen Phyllosilikate sind, ausgewählt aus Montmorillonit und/oder Hectorit und/oder Saponit und/oder Vermiculit, und/oder Smectit, und/oder Illit, und/oder Sepiolit und/oder Palygorskit, und/oder Muscovit, und/oder Allevardit, und/oder Amesit und/oder Fluorhectorit, und/oder Beidellit und/oder Talkum, und/oder Nontronit, und/oder Stevensit, und/oder Bentonit, und/oder Glimmer, und/oder Fluorvermiculit, und/oder Halloysit und/oder Fluor enthaltende synthetische Talkumtypen sind, oder ein anionenaustauschfähiges Hydrotalcit.

5. Zusammensetzung nach Anspruch 3, wobei die Ammoniumkomponente ein protoniertes primäres, sekundäres oder tertiäres Amin, eine protonierte basische Heteroatomverbindung oder eine qarternäre Ammoniumverbindung ist, die als Substituenten über mindestens eine Alkyl- oder funktionalisierte Alkylgruppe mit mehr als 6 Methylengruppen verfügt.

6. Zusammensetzung nach Anspruch 3, wobei die Carboxylatkomponente ein primäres Carboxylat ist, das als Substituent über eine Alkyl- oder funktionalisierte Alkylgruppe mit mehr als 6 Methylgruppen verfügt.

7. Zusammensetzung nach Anspruch 1, wobei die Komponente (C) ein Poly(styrol-coacrylnitril)-; Poly(styrol-co-methylvinyloxazolin)-; Poly(styrol-co-maleinsäureanhydrid)-; Poly(styrol-co-methylvinyloxazolin-co-acrylnitril)- oder Poly(styrol-co-maleinsäureimid)-copolymeres ist.

8. Zusammensetzung nach den Ansprüchen 1 oder 7, wobei Komponente (C) ein Poly(styrol-co-maleinsäureimid)-copolymeres mit einem Rest unreagierter Maleinsäureanhydridgruppen ist und ein gewichtsmittleres Molekulargewicht zwischen 80 und 200.000 aufweist.

9. Zusammensetzung nach Anspruch 8, wobei der Gehalt der Komponente (C) an unreagierten Maleinsäureanhydridgruppen zwischen 0,1 und 10 mol% und der Gehalt an Maleinimidgruppen zwischen 0,1 und 50 mol% beträgt.

10. Zusammensetzung nach einem der Ansprüche 1 - 9, zusätzlich umfassend die Zugabe von 0 - 200 Gewichtsteilen, bezogen auf die Summe der Komponenten (A) (B) und (C) in Form von bis zu 5 Gewichtsteilen Gleit- oder Verarbeitungshilfsmittel, bis zu 5 Gewichtsanteilen Pigmente, bis zu 2 Gewichtsanteilen Nukleirungsmittel, bis zu einem Gewichtsanteil Stabilisatoren, bis zu 2 Gewichtsanteilen Treibmittel, bis zu 2 Gewichtsanteilen Antistatika, bis zu 100 Gewichtsanteilen Prozessöle, bis zu 100 Gewichtsanteilen Flammschutzmittel und bis zu 100 Gewichtsanteilen Kautschuken.

11. Verwendung des durch lonenaustausch organophil modifizierte, anorganische Füllstoffe enthaltenden Thermoplastgemisches, nach einem der Ansprüche 1 - 10 zur Herstellung von Formteilen oder Halbzeugen.

12. Formteile, umfassend ein durch lonenaustausch organophil modifizierte, anorganische Füllstoffe enthaltenes Thermoplastgemisch nach einem der Ansprüche 1-10.

13. Halbzeuge, umfassend ein durch lonenaustausch organophil modifizierte, anorganische Füllstoffe enthaltendes Thermoplastgemisch, nach einem der Ansprüche 1-10.

14. Formteile, nach Anspruch 12, für die Bereiche Automobilindustrie, Medizintechnik, Hausgeräteindustrie, Büroartikelindustrie und Elektronikindustrie.

15. Verfahren zur Herstellung des durch lonenaustausch organophil modifizierte, anorganische Füllstoffe enthaltenden Thermoplastgemisches nach einem der vorhergehenden Ansprüche.
